# EUROPEAN PATENT SPECIFICATION

(11) **EP 3 958 522 B1**
(45) Date of publication and mention of the grant of the patent: **15.01.2025**
(21) Application number: 20812929.6
(22) Date of filing: 06.05.2020
(51) Int. Cl.: H04L 69/12, H04W 28/10, H04L 45/74, H04L 61/00, H04L 101/622

(54) **TRAFFIC PROCESSING METHOD AND RELATED DEVICE, METHOD AND APPARATUS FOR ESTABLISHING FORWARDING TABLE, AND STORAGE MEDIUM**
VERFAHREN UND VORRICHTUNG ZUR VERKEHRSVERARBEITUNG, VERFAHREN UND VORRICHTUNG ZUM EINRICHTEN EINER WEITERLEITUNGSTABELLE UND SPEICHERMEDIUM
PROCÉDÉ DE TRAITEMENT DE TRAFIC ET DISPOSITIF ASSOCIÉ, PROCÉDÉ ET APPAREIL PERMETTANT D'ÉTABLIR UNE TABLE DE TRANSFERT, ET SUPPORT D'INFORMATIONS

(30) Priority: 24.05.2019 CN 201910442021
(43) Date of publication of application: 23.02.2022
(73) Proprietor: ZTE Corporation, Shenzhen Guangdong 518057 (CN)
(72) Inventor: TIAN, Hongliang, Shenzhen, Guangdong 518057 (CN)
(74) Representative: Swindell & Pearson Limited
(86) International application number: PCT/CN2020/088738
(87) International publication number: WO 2020/238564

(56) References cited:
- EP-A1- 2 922 345
- WO-A1-2017/100640
- WO-A1-2017/176329
- WO-A1-2018/165934
- CN-A- 105 991 446
- CN-A- 107 787 017
- CN-A- 109 076 415

## Description

### TECHNICAL FIELD

The present invention relates to, but not limited to, wired broadband access, and more particularly, to a traffic processing method and a related device, a method for establishing a forwarding table, and a storage medium.

### BACKGROUND

With the continuous development of high-value services with large bandwidth, low latency and strong interaction, edge computing has attracted the attention of operators. Access computer room is the main location for edge computing deployment. At this location, according to the existing wired broadband access network architecture, the edge computing server may need to be accessed as a dedicated line user with a fixed IP address, which is often different from Virtual Local Area Network (VLAN) and Internet Protocol address (IPA) network segments of end users. Furthermore, users under the same access device are often horizontally isolated. Therefore, even if the edge computing server and the users are in the same VLAN and IP network segment, they cannot directly perform layer-2 communication, but need to perform layer-3 communication through BRAS (Broadband Remote Access Server).

In addition, Point-to-Point Protocol over Ethernet (PPPoE) access is widely used by end users in the existing network, and PPPoE ends in BRAS. In this way, even if a customer premise equipment (CPE) and an edge computing server are both directly connected to an optical line terminal (OLT), the user and the edge computing server can interact only through BRAS. Users make detours in accessing Mobile Edge Computing Application Server (MEC app server), wasting the link bandwidth from OLT to BRAS/SR. Meanwhile, with the increase of paths, the delay and packet loss may increase, affecting the quality of service experience.

EP2922345A1 provides a system in which addition of a network facility due to an increase in traffic is reduced and mobility for traffic offloading is implemented. The system provides a switch between a first network (CN) and a second network (PDN) and offloading determination means that determines whether or not to offload traffic for the first network, and configures an offload path to bypass the first network for the switch when the offloading is performed. When the traffic is offloaded, the switch forwards a packet to be offloaded to the offload path.

In WO2018165934A1, a traffic offloading function (TOF) of a mobile edge computing (MEC) platform uses a traffic forwarding table and a location database updated by monitoring control plane messages. User plane traffic in a default bearer passes through an extended TOF where the IP packets retrieved from a General Packet Radio Service Tunneling Protocol (GTP) tunnel are forwarded following a policy that is created by detecting (or sniffing) control plane messages exchanged over the S1-MME interface. An additional entity, a location database, is responsible for tracking a location of a UE and other hosts in the mobile network. The location database can be used to guide the forwarding policy creation in an absence of the control plane messages.

### SUMMARY

This invention is defined by the appended claims. In view of the above technical problems, according to some embodiments of the present invention, a traffic processing method is provided, including: determining whether an upstream traffic message is local traffic; and performing layer-3 forwarding for the upstream traffic message according to a forwarding table stored locally in response to the upstream traffic message being local traffic, wherein determining whether the upstream traffic message is local traffic comprises: determining whether a destination IP of the upstream traffic message matches IP information in the forwarding table; wherein the IP information in the forwarding table is IP information of a device directly connected to the TOF or directly connected to a layer-2 access device to which the TOF is connected or belongs determining that the upstream traffic message is local traffic in response to a match between the destination IP of the upstream traffic message and the IP information in the forwarding table; and determining that the upstream traffic message is not local traffic in response to no match between the destination IP of the upstream traffic message and the IP information in the forwarding table.

According to some embodiments of the present invention, a Traffic Offload Function (TOF) is also provided, including an IP forwarding module for upstream local traffic; where the IP forwarding module for upstream local traffic is configured to determine whether an upstream traffic message is local traffic, and perform layer-3 forwarding for the upstream traffic message according to a forwarding table stored locally in response to the upstream traffic message being local traffic, wherein the IP forwarding module for upstream local traffic is further configured to:determine whether a destination IP of the upstream traffic message matches IP information in the forwarding table; wherein the IP information in the forwarding table is IP information of a device directly connected to the TOF or directly connected to a layer-2 access device to which the TOF is connected or belongs; determine that the upstream traffic message is local traffic in response to a match between the destination IP of the upstream traffic message and the IP information in the forwarding table; and determine that the upstream traffic message is not local traffic in response to no match between the destination IP of the upstream traffic message and the IP information in the forwarding table.

According to some embodiments of the present invention, a layer-2 access device is also provided, including the TOF described above.

According to some embodiments of the present invention, a traffic processing system is also provided, including a layer-2 access device and the TOF described above.

Additional features and advantages of the present invention will be set forth in the description which follows, and in part will be obvious from the description, or may be learned by practice of the present invention. The objects and other advantages of the present invention can be realized and obtained by the structures pointed out in the description, claims and drawings.

The invention is set out in the appended set of claims.

### BRIEF DESCRIPTION OF DRAWINGS

The drawings are provided for a further understanding of the technical schemes of the present application, and constitute a part of the description. The drawings and the embodiments of the present application are used to explain the technical schemes of the present application, and do not constitute a restriction on the technical schemes of the present invention.
FIG. 1 is a schematic diagram of communication between user side equipment and MEC APP server through BRAS in existing networking;
FIG. 2 is a flowchart of a traffic processing method according to an embodiment of the present invention;
FIG. 3 is a schematic structural diagram of a Traffic Offload Function (TOF) according to an embodiment of the present invention;
FIG. 4 is a flowchart of a traffic processing method according to another embodiment of the present invention;
FIG. 5 is a schematic diagram of networking according to an embodiment of the present invention;
FIG. 6 is a flowchart of a traffic processing method according to another embodiment of the present invention;
FIG. 7 is a schematic diagram of networking according to an embodiment of the present invention;
FIG. 8 is a schematic diagram of networking according to an embodiment of the present invention;
FIG. 9 is a flowchart of a traffic processing method according to another embodiment of the present invention;
FIG. 10 is a schematic diagram of networking according to an embodiment of the present invention;
FIG. 11 is a schematic structural diagram of a layer-2 access device according to an embodiment of the present invention;
FIG. 12 is a schematic structural diagram of a traffic processing system according to an embodiment of the present invention;
FIG. 13 is a flowchart of a method for establishing a forwarding table according to an embodiment of the present invention; and
FIG. 14 is a schematic structural diagram of an apparatus for establishing a forwarding table according to an embodiment of the present invention.

### DETAILED DESCRIPTION

Objects, technical schemes and advantages of the present invention will be clearer from a detailed description of embodiments of the present invention in conjunction with the drawings. It is to be noted that if not in collision, the embodiments and features therein in the present application may be combined with each other.

The steps shown in the flowcharts of the drawings may be performed in a computer system, such as a set of computer-executable instructions. Also, although a logical order is shown in the flowcharts, in some cases, the steps shown or described may be performed in a different order than here.

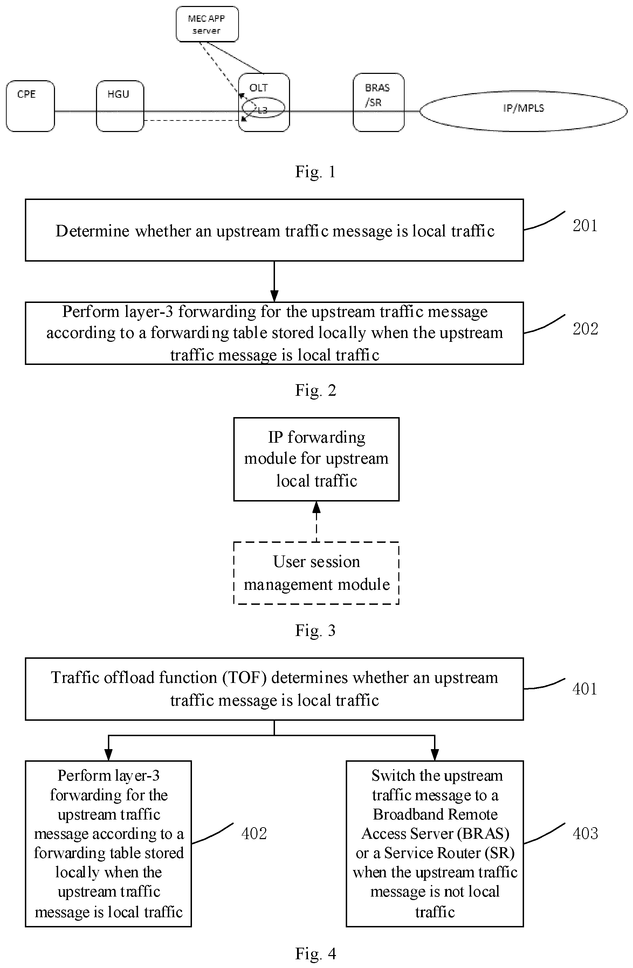

FIG. 1 is a schematic diagram of communication between user side equipment and MEC APP server through BRAS in existing networking. As shown in FIG. 1, a customer premise equipment (CPE) is directly connected to an Optical Line Terminal (OLT) through a HGU (Home Gateway Unit), and an edge computing server is also directly connected to the OLT, but the user and the edge computing server can interact only through BRAS, which not only wastes the link bandwidth from OLT to BRAS/SR, but also increases the delay and packet loss with the increase of paths, affecting the quality of service experience.

Therefore, according to some embodiments of the present invention, a traffic processing method and a related device are provided, which can realize local traffic offloading on a layer-2 access device, so as to save the link bandwidth from the layer-2 access device, such as OLT, to BRAS/SR, and keep the existing network architecture unaffected.

FIG. 2 is a flowchart of a traffic processing method according to an embodiment of the present invention, which is applied to a Traffic Offload Function (TOF). As shown in FIG. 2, the method includes steps of S201 and S202.

At S201, whether the upstream traffic message is local traffic is determined.

At S202, layer-3 forwarding is performed for the upstream traffic message according to a forwarding table stored locally when the upstream traffic message is local traffic.

In some embodiments, the upstream traffic message is switched to a Broadband Remote Access Server (BRAS) or a Service Router (SR) when the upstream traffic message is not local traffic.

In some embodiments, determining whether the upstream traffic message is local traffic includes:
- determining whether a destination IP of the upstream traffic message matches IP information in the forwarding table; where the IP information in the forwarding table is IP information of a device directly connected to the TOF or directly connected to a layer-2 access device to which the TOF is connected or belongs;
- determining that the upstream traffic message is local traffic when there is a match between the destination IP of the upstream traffic message and the IP information in the forwarding table; and
- determining that the upstream traffic message is not local traffic when there is no match between the destination IP of the upstream traffic message and the IP information in the forwarding table.

In some embodiments, before determining whether the upstream traffic message is local traffic, the method further includes:
establishing and saving the forwarding table; and
the forwarding table includes the IP information and at least one of the following information corresponding to the IP information:
   session type, Point-to-Point Protocol over Ethernet (PPPoE) session ID, access port, layer-2 encapsulation information, session state, local traffic value, session time, Media Access Control address BRAS/SR MAC.

In some embodiments, the forwarding table includes a user forwarding table and a server forwarding table.

The user forwarding table includes user IP information, which is IP information of a user side equipment directly connected to a layer-2 access device to which the TOF is connected or belongs; and the user forwarding table also includes at least one of the following information corresponding to the user IP information:
session type, PPPoE session ID, access port, layer-2 encapsulation information, session state, local traffic value, session time, BRAS/SR MAC.

The server forwarding table includes server IP information, which is IP information of a server device directly connected to the TOF or directly connected to the layer-2 access device to which the TOF belongs; and the server forwarding table also includes at least one of the following information corresponding to the server IP information:
session type, PPPoE session ID, access port, layer-2 encapsulation information, session state, local traffic value, session time, BRAS/SR MAC.

In some embodiments, the forwarding table includes a user forwarding table and a server forwarding table.

The determining whether the destination IP of the upstream traffic message matches the IP information in the forwarding table includes:
- determining whether the destination IP of the upstream traffic message matches the server IP information in the server forwarding table when the upstream traffic message is a traffic message sent by user side; and
- determining whether the destination IP of the upstream traffic message matches the user IP information in the user forwarding table when the upstream traffic message is a traffic message sent by server side.

In some embodiments, establishing the forwarding table includes:
for PPPoE dynamic access mode, dynamically establishing the forwarding table by listening to PPPoE process, or establishing the forwarding table in a self-learning manner by listening to a data message of a session;
or, for DHCP dynamic access mode, establishing the forwarding table by listening to DHCP process, or establishing the forwarding table in a self-learning manner by listening to the data message of the session;
or, for static IP access mode, establishing the forwarding table in a self-learning manner by listening to the data message of the session; or establishing the forwarding table by direct manual assignment;
or, establishing the forwarding table by interacting with BRAS/SR messages.

In some embodiments, the method further includes:
for the PPPoE dynamic access mode, dynamically updating or revoking the forwarding table by listening to the PPPoE process; or updating the forwarding table in a self-learning manner by listening to the data message of the session, and revoking the forwarding table through aging mechanism;
or, for the DHCP dynamic access mode, updating or revoking the forwarding table by listening to the DHCP process; or updating the forwarding table in a self-learning manner by listening to the data message of the session, and revoking the forwarding table through aging mechanism;
or, for the static IP access mode, updating the forwarding table in a self-learning manner by listening to the data message of the session, and revoking the forwarding table through aging mechanism; or updating or revoking the forwarding table by direct manual assignment;
or, updating or revoking the forwarding table by interacting with the BRAS/SR messages.

In some embodiments, performing layer-3 forwarding for the upstream traffic message according to the forwarding table stored locally includes:
modifying a header of layer-2 encapsulation of the upstream traffic message according to the forwarding table stored locally, and sending the modified upstream traffic message, including:
modifying a source MAC address of the upstream traffic message to a MAC address of a BRAS/SR and a destination MAC address to a MAC address of a destination device corresponding to a destination IP of the upstream traffic message according to the MAC address of the BRAS/SR, a VLAN Tag and an access port corresponding to IP address information matched with the destination IP of the upstream traffic message in the forwarding table, and adding the VLAN tag; and
sending the modified upstream traffic message according to the access port.

In some embodiments, if the traffic message belongs to a PPPoE session, PPPoE session encapsulation is added to the header of the layer-2 encapsulation of the modified upstream traffic message, and then the modified upstream traffic message is sent according to the access port.

The destination device corresponding to the destination IP of the upstream traffic message and directly connected to the TOF is a mobile edge computing application server (MEC APP Server) or an optical line terminal (OLT).

The destination device directly connected to the layer-2 access device to which the TOF belongs is a MEC APP Server or a home gateway unit (HGU).

FIG. 3 is a schematic structural diagram of a Traffic Offload Function (TOF) according to an embodiment of the present invention. As shown in FIG. 3, the TOF includes:
an IP forwarding module for upstream local traffic;
the IP forwarding module for upstream local traffic is configured to determine whether an upstream traffic message is local traffic; and
perform layer-3 forwarding for the upstream traffic message according to a forwarding table stored locally when the upstream traffic message is local traffic.

In some embodiments, the IP forwarding module for upstream local traffic is further configured to switch the upstream traffic message to a Broadband Remote Access Server (BRAS) or a Service Router (SR) when the upstream traffic message is not local traffic.

In some embodiments, the IP forwarding module for upstream local traffic is configured to determine whether a destination IP of the upstream traffic message matches IP information in the forwarding table; where the IP information in the forwarding table is IP information of a device directly connected to the TOF or directly connected to a layer-2 access device to which the TOF is connected or belongs;
determine that the upstream traffic message is local traffic when there is a match between the destination IP of the upstream traffic message and the IP information in the forwarding table; and
determine that the upstream traffic message is not local traffic when there is no match between the destination IP of the upstream traffic message and the IP information in the forwarding table.

In some embodiments, the TOF also includes a user session management module.

The user session management module is configured to establish, update or revoke the forwarding table, including:
for the PPPoE dynamic access mode, dynamically establishing, updating or revoking the forwarding table by listening to the PPPoE process; or establishing or updating the forwarding table in a self-learning manner by listening to the data message of the session, and revoking the forwarding table through aging mechanism;
or, for the DHCP dynamic access mode, establishing, updating or revoking the forwarding table by listening to the DHCP process; or establishing or updating the forwarding table in a self-learning manner by listening to the data message of the session, and revoking the forwarding table through aging mechanism;
or, for the static IP access mode, establishing or updating the forwarding table in a self-learning manner by listening to the data message of the session, and revoking the forwarding table through aging mechanism; or establishing, updating or revoking the forwarding table by direct manual assignment;
or, establishing, updating or revoking the forwarding table by interacting with the BRAS/SR messages.

In some embodiments, the forwarding table includes a user forwarding table and a server forwarding table.

The user forwarding table includes user IP information, which is IP information of a user side equipment directly connected to a layer-2 access device to which the TOF is connected or belongs; and the user forwarding table also includes at least one of the following information corresponding to the user IP information:
session type, PPPoE session ID, access port, layer-2 encapsulation information, session state, local traffic value, session time, BRAS/SR MAC.

The server forwarding table includes server IP information, which is IP information of a server device directly connected to the TOF or directly connected to the layer-2 access device to which the TOF belongs; and the server forwarding table also includes at least one of the following information corresponding to the server IP information:
session type, PPPoE session ID, access port, layer-2 encapsulation information, session state, local traffic value, session time, BRAS/SR MAC.

In some embodiments, the forwarding table includes a user forwarding table and a server forwarding table.

The IP forwarding module for upstream local traffic is configured to determine whether the destination IP of the upstream traffic message matches the server IP information in the server forwarding table when the upstream traffic message is a traffic message sent by user side; and
determine whether the destination IP of the upstream traffic message matches the user IP information in the user forwarding table when the upstream traffic message is a traffic message sent by server side.

In some embodiments, the IP forwarding module for upstream local traffic is configured to modify a header of layer-2 encapsulation of the upstream traffic message according to the forwarding table stored locally and send the modified upstream traffic message, including:
modifying a source MAC address of the upstream traffic message to a MAC address of a BRAS/SR and a destination MAC address to a MAC address of a destination device corresponding to a destination IP of the upstream traffic message according to the MAC address of the BRAS/SR, a VLAN Tag and an access port corresponding to IP address information matched with the destination IP of the upstream traffic message in the forwarding table, and adding the VLAN tag; and
sending the modified upstream traffic message according to the access port.

In some embodiments, the IP forwarding module for upstream local traffic is further configured to, if the traffic message belongs to a PPPoE session, add PPPoE session encapsulation to the header of the layer-2 encapsulation of the modified upstream traffic message, and then send the modified upstream traffic message according to the access port.

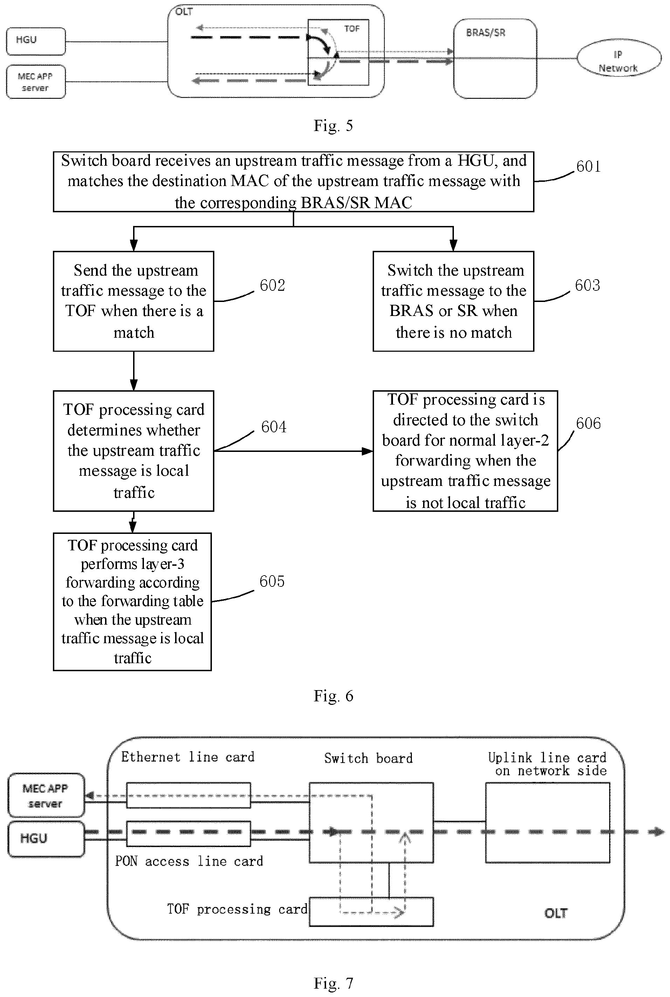

FIG. 4 is a flowchart of a traffic processing method according to another embodiment of the present invention. This embodiment is applied to the networking diagram shown in FIG. 5. As shown in FIG. 5, a Traffic Offload Function (TOF) is configured in a layer-2 access device.

In this embodiment, the layer-2 access device takes OLT as an example, and the layer-2 access device may also be other access devices such as DSLAM.

The method includes steps of S401, S 402 and S403.

At S401, the TOF determines whether an upstream traffic message is local traffic.

The local traffic refers to the traffic of the upstream traffic message where the destination device corresponding to the destination IP is directly connected to the OLT. As shown in FIG. 5, when the OLT receives an upstream traffic message sent from HGU and the destination device corresponding to destination IP is MEC APP Server directly connected to the OLT, the upstream traffic message is local traffic. In the same way, when the OLT receives an upstream traffic message sent from MEC APP Server and the destination device corresponding to destination IP is HGU directly connected to the OLT, the upstream traffic message is also local traffic. When the destination device corresponding to the destination IP is not directly connected to the OLT, the upstream traffic message is not local traffic, and layer 2 switching is performed according to the original processing to BRAS or SR for further processing.

Specifically, the local traffic refers to the traffic between users and MEC APP server. MEC APP server and OLT are connected through layer-2, directly or through a layer 2 switch. Meanwhile, MEC APP server and OLT are generally deployed in the same computer room. In addition, users can access MAN & Internet through BRAS device, which will also generate traffic. To distinguish these two types of traffic, the traffic between users and MEC APP server is generally called local traffic, and the traffic between users and MAN & Internet is called large network traffic.

The TOF includes two sub-modules: a user session management module and an IP forwarding module for upstream local traffic.

At S402, layer-3 forwarding is performed for the upstream traffic message according to the forwarding table stored locally when the upstream traffic message is local traffic.

The TOF includes two sub-modules: a user session management module and an IP forwarding module for upstream local traffic.

The user session management module can establish, update or revoke a forwarding table (session table) by various modes, for example:
1. Session protocol listening mode: An access device dynamically establishes, updates or revokes a forwarding table (session table) by listening to PPPoE and DHCP processes. This mode may be mainly used for PPPoE dynamic access and DHCP (Dynamic Host Configuration Protocol) dynamic access.
2. Data traffic listening mode: An access device dynamically establishes or updates a forwarding table (session table) in a self-learning manner by listening to a data message of a session, and revokes the forwarding table (session table) through aging mechanism. This mode may be mainly used for static IP access, and may also be used for PPPoE dynamic access and DHCP dynamic access.
3. Manual assignment mode: for static IP access, a forwarding table (session table) can also be established, updated or revoked by direct manual assignment.
4. A forwarding table (session table) is directly established and revoked by interacting with BRAS/SR messages, so as to fully synchronize data with the BRAS/SR, and save the access device from the function of establishing table entries by listening and learning.

The forwarding table may be a table, and IP information in the forwarding table is IP information of a device directly connected to the TOF or directly connected to a layer-2 access device to which the TOF is connected or belongs. The forwarding table also includes at least one of the following information corresponding to the IP information: session type, PPPoE session ID, access port, layer-2 encapsulation information, session state, local traffic value, session time, BRAS/SR MAC.

In some embodiments, the forwarding table may also include a user forwarding table and a server forwarding table.

The user forwarding table includes user IP information, which is IP information of a user side equipment directly connected to the layer-2 access device to which the TOF is connected or belongs. In this embodiment, the user IP information is HGU IP.

The user forwarding table also includes at least one of the following information corresponding to the user IP information:
session type, PPPoE session ID, access port, layer-2 encapsulation information, session state, local traffic value, session time, BRAS/SR MAC.

The server forwarding table includes server IP information, which is IP information of a server device directly connected to the TOF or directly connected to the layer-2 access device to which the TOF belongs. In this embodiment, the server IP information is MEC APP Server IP.

The server forwarding table also includes at least one of the following information corresponding to the server IP information:
session type, PPPoE session ID, access port, layer-2 encapsulation information, session state, local traffic value, session time, BRAS/SR MAC.

The meanings of the fields in the user forwarding table are as follows:
Session type: PPPoE/DHCP/static IP, etc;
User IP: IP address assigned by BRAS/SR to session host;
PPPoE session ID: PPPoE session ID;
Access port: Physical port and virtual logical port (such as Gem port of GPON) where the user is located;
Layer-2 encapsulation information: Layer-2 link encapsulation information such as VLAN tag, CoS and TPID;
Session state: State of being established, established, being ended, and ended;
Local traffic: Statistical value of traffic forwarded locally;
Session time: Start time, Duration, End time, etc;
BRAS/SR MAC: MAC address of BRAS/SR where the session ends, which can be different for different sessions;
In the server forwarding table, the server IP is the IP address assigned by BRAS/SR to MEC APP Server. Other fields are similar to those in the user forwarding table and will not be described in detail.

In addition, the user session management module can also automatically listen or learn data messages through PPPoE/DHCP, establish and maintain an accessed PPPoE/IpoE (IP over Ethernet) user table, and notify the IP forwarding module for upstream local traffic to form a user forwarding table; and establish and maintain a server table for static IP access through manual assignment by administrators and ARP (Address Resolution Protocol) listening, and notify the IP forwarding module for upstream local traffic to form a server host forwarding table.

The user table and user forwarding table contain information such as user IP address, user MAC, PPPoE and IPoE session information, VLAN, access port and gateway MAC. The server table and server forwarding table contain information such as server IP address, VLAN, access port, gateway MAC.

In some embodiment, performing layer-3 forwarding for the upstream traffic message according to the forwarding table stored locally includes:
stripping the original header of layer-2 encapsulation of the packet, adding a new layer-2 header according to the matched user forwarding table or server forwarding table, using a user MAC as a destination MAC or filling in the destination MAC by a server, replacing a source MAC with a gateway MAC (that is, BRAS/SR MAC) in the table entries; adding VLAN tag, adding PPPoE session encapsulation if the packet belongs to a PPPoE session; and sending the packet according to the access port in the matching table entries after the layer-2 encapsulation conversion processing is completed. In this way, packets received by HGU and MEC APP Server are identical with packets from BRAS/SR. In other words, the TOF simulates the layer-3 forwarding function of BRAS or SR, which is completely transparent to HGU and MEC APP Server. Meanwhile, TOF may only intercepts and processes local data traffic, and the user management and layer-3 forwarding functions of BRAS are basically unaffected, which is also completely transparent to BRAS&SR, requiring no changes in functions, configuration and resource planning. Therefore, according to the method and the system of the present invention, the traffic of local users accessing the local edge computing server can be well offloaded, so that the traffic does not need to be forwarded through BRAS or SR, thus shortening the forwarding path, saving the bandwidth and indirectly improving the quality of user experience.

In some embodiments, the IP forwarding module for upstream local traffic analyzes the upstream traffic message from HGU or MEC APP server, extracts the destination IP, and matches the destination IP with the server forwarding table or user forwarding table. If there is a match between the destination IP and the server forwarding table or user forwarding table, it indicates that the traffic is local traffic, which needs to be offloaded and forwarded locally; and if there is no match between the destination IP and the server forwarding table or user forwarding table, it indicates that the traffic is not local traffic, and layer 2 switching is performed according to the original processing to BRAS or SR for further processing.

At S403, the upstream traffic message is switched to the BRAS or SR when the upstream traffic message is not local traffic.

That is, layer-3 forwarding is performed for the local traffic and layer-2 transparent transmission is performed for the large network traffic, which is equivalent to layer-3 forwarding for local traffic by BRAS/SR being moved down to an access device (such as OLT). Therefore, this module function is also called gateway proxy (GW proxy) function.

According to the technical schemes of the embodiments of the present invention, TOF may only intercepts and processes local data traffic, and the user management and layer-3 forwarding functions of BRAS are basically unaffected, which is also completely transparent to BRAS&SR, requiring no changes in functions, configuration and resource planning. Therefore, according to the method and the system of the present invention, the traffic of local users accessing the local edge computing server can be well offloaded, so that the traffic does not need to be forwarded through BRAS or SR, thus shortening the forwarding path, saving the bandwidth and indirectly improving the quality of user experience.

FIG. 6 is a flowchart of a traffic processing method according to another embodiment of the present invention.

The original access device such as OLT or DSLAM can undertake the TOF through software upgrade or new board card. The following is an example of a new board card.

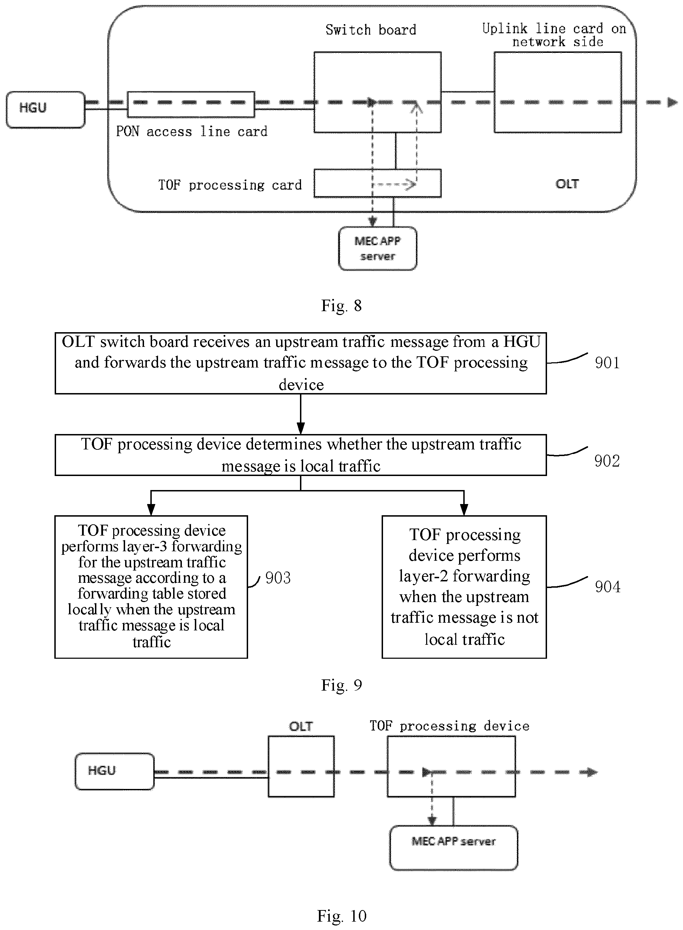

This embodiment is applied to the networking diagram shown in FIG. 7 or FIG. 8. As shown in FIG. 7, a TOF processing card is built in a layer-2 access device OLT, and the built-in TOF processing card is connected to an Ethernet line card and PON access line card through a switch board. MEC APP server can be accessed through the Ethernet board, and the TOF function can be realized through the built-in TOF processing card. As shown in FIG. 8, a TOF processing card is built in a layer-2 access device OLT. The TOF processing card is connected to the PON access line card through the switch board, and MEC APP Server is directly connected to the TOF. The TOF function can be realized through the built-in TOF processing card.

The method includes steps of S601, S602, S603, S604, S605 and S606.

At S601, the switch board receives an upstream traffic message from a HGU, and matches the destination MAC of the upstream traffic message with the corresponding BRAS/SR MAC.

At S602, the upstream traffic message is sent to the TOF processing card when there is a match between the destination MAC of the upstream traffic message and the corresponding BRAS/SR MAC.

At S603, the upstream traffic message is switched to the BRAS or SR when there is no match between the destination MAC of the upstream traffic message and the corresponding BRAS/SR MAC.

In some embodiments, the switch board has a simple layer-2 traffic offloading capability, that is, the switch board can redirect the traffic according to the destination MAC. In this case, the switch board performs MAC matching for the upstream traffic message from users and servers, and the packet whose destination MAC matching with the BRAS/SR MAC is redirected to the TOF processing card for processing, while other traffic is processed by normal layer-2 forwarding.

At S604, the TOF processing card determines whether the upstream traffic message is local traffic.

The process of determining whether the upstream traffic message is local traffic is similar to the previous embodiment, and will not be described in detail.

At S605, the TOF processing card performs layer-3 forwarding according to the forwarding table when the upstream traffic message is local traffic.

At S606, the TOF processing card is directed to the switch board for normal layer-2 forwarding when the upstream traffic message is not local traffic.

The relevant contents of the forwarding table are similar to those of the previous embodiment, and will not be described in detail.

The TOF processing card analyzes the destination IP, matches the destination IP with the user forwarding table and the server forwarding table, to further distinguish local traffic and not local traffic; where the not local traffic is directed to the switch board for normal layer-2 forwarding, and the local traffic is subjected to layer-3 forwarding by simulating BRAS or SR according to the user forwarding table or server forwarding table.

In this embodiment, when the destination device corresponding to the destination IP of the upstream traffic message is a MEC APP Server, the TOF processing card performs layer-3 forwarding and sends the packet to the MEC APP Server; and when the destination device corresponding to the destination IP of the upstream traffic message is not a directly connected MEC APP Server, the TOF processing card performs layer-2 forwarding and sends the packet to BRAS or SR through an uplink line card on network side.

In addition, the switch board may have a flow mirroring function for protocol. The switch board copies PPPoE and DHCP protocol packets to the TOF board through flow mirroring, and the TOF board listens to the protocol process accordingly, and establishes and maintains the user forwarding table and the server forwarding table. If the switch board does not have the flow mirroring function for protocol, the TOF can also establish and maintain the user forwarding table and server forwarding table through the data message learning and aging mechanism.

In addition, if the switch board does not have layer-2 traffic offloading capability, all traffics can be directed to the TOF board for processing. This method is simple, but requires higher processing performance of the TOF board, and the implementation is the same as that of the previous embodiment.

FIG. 9 is a flowchart of a traffic processing method according to another embodiment of the present invention.

If an access device cannot be upgraded or built with a TOF processing card, the access device may also be implemented by an external TOF processing device.

This embodiment is applied to the networking diagram shown in FIG. 10. As shown in FIG. 10, the external TOF processing device is connected to an OLT and a MEC APP Server to realize TOF. Generally, the MEC APP Server is directly connected to the TOF device, and an upper interface of the OLT is also directly connected to the TOF device, while the TOF device is connected to upstream BRAS/SR.

The method includes steps of S901, S902, S903 and S904.

At step S901, the OLT switch board receives an upstream traffic message from a HGU and forwards the upstream traffic message to the TOF processing device.

In this embodiment, the OLT is not limited, but used for forwarding packets.

At step S902, the TOF processing device determines whether the upstream traffic message is local traffic.

The determination process is similar to the above embodiments, and will not be described in detail.

At step S903, the TOF processing device performs layer-3 forwarding for the upstream traffic message according to a forwarding table stored locally when the upstream traffic message is local traffic.

The relevant contents of the forwarding table are similar to the above embodiments, and will not be described in detail.

The layer-3 forwarding is similar to the above embodiments, and will not be described in detail.

At step S904, the TOF processing device performs layer-2 forwarding when the upstream traffic message is not local traffic.

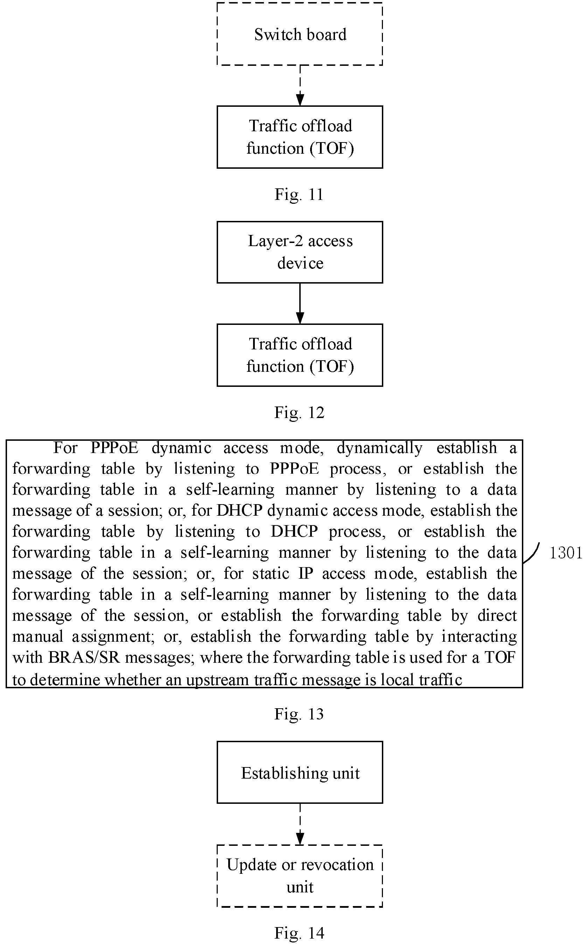

FIG. 11 is a schematic structural diagram of a layer-2 access device according to an embodiment of the present invention. As shown in FIG. 11, the layer-2 access device includes the traffic offloading function (TOF) described in any of the above embodiments.

The layer-2 access device also includes a switch board.

The switch board is configured to receive an upstream traffic message and match a destination MAC of the upstream traffic message with the corresponding BRAS/SR MAC.

When there is a match between the destination MAC of the upstream traffic message and the corresponding BRAS/SR MAC, the switch board sends the upstream traffic message to the Traffic Offload Function (TOF).

When there is no match between destination MAC of the upstream traffic message and the corresponding BRAS/SR MAC, the switch board switches the upstream traffic message to the BRAS or SR.

In some embodiments, the upstream traffic message is directly switched to the BRAS or the SR when the TOF is directly connected to the BRAS or the SR and the upstream traffic message is not local traffic.

The TOF switches the upstream traffic message to the BRAS or the SR through the switch board when the switch board is directly connected to the BRAS or the SR and the upstream traffic message is not local traffic.

FIG. 12 is a schematic structural diagram of a traffic processing system according to an embodiment of the present invention. As shown in FIG. 12, the traffic processing system includes a layer-2 access device and the traffic offloading function (TOF) described in any of the above embodiments.

The layer-2 access device is configured to receive an upstream traffic message and forward the upstream traffic message to the TOF.

The TOF is directly connected to a BRAS or a SR.

A destination device corresponding to a destination IP of the upstream traffic message and directly connected to the TOF is a MEC APP Server.

A destination device corresponding to a destination IP of the upstream traffic message and directly connected to the layer-2 access device is a HGU.

FIG. 13 is a flowchart of a method for establishing a forwarding table according to an embodiment of the present invention. As shown in FIG. 13, the method includes a step of S1301.

At step S1301, for PPPoE dynamic access mode, the forwarding table is dynamically established by listening to PPPoE process, or the forwarding table is established in a self-learning manner by listening to a data message of a session;
or, for DHCP dynamic access mode, the forwarding table is established by listening to DHCP process, or the forwarding table is established in a self-learning manner by listening to the data message of the session;
or, for static IP access mode, the forwarding table is established in a self-learning manner by listening to the data message of the session; or the forwarding table is established by direct manual assignment;
or, the forwarding table is established by interacting with BRAS/SR messages.

The forwarding table is used for a TOF to determine whether the upstream traffic message is local traffic.

The forwarding table includes IP information of a device directly connected to the TOF or directly connected to a layer-2 access device to which the TOF is connected or belongs.

The forwarding table also includes at least one of the following information corresponding to the IP information:
session type, PPPoE session ID, access port, layer-2 encapsulation information, session state, local traffic value, session time, BRAS/SR Media Access Control address (MAC).

The forwarding table is also used for the TOF to perform layer-3 forwarding for the upstream traffic message.

In some embodiments, the forwarding table includes a user forwarding table and a server forwarding table.

The user forwarding table includes user IP information, which is IP information of a user side equipment directly connected to a layer-2 access device to which the TOF is connected or belongs, and the user forwarding table also includes at least one of the following information corresponding to the user IP information:
session type, PPPoE session ID, access port, layer-2 encapsulation information, session state, local traffic value, session time, BRAS/SR MAC.

The server forwarding table includes server IP information, which is IP information of a server device directly connected to the TOF or directly connected to the layer-2 access device to which the TOF belongs, and the server forwarding table also includes at least one of the following information corresponding to the server IP information:
session type, PPPoE session ID, access port, layer-2 encapsulation information, session state, local traffic value, session time, BRAS/SR MAC.

In some embodiments, the method further includes:
for the PPPoE dynamic access mode, dynamically updating or revoking the forwarding table by listening to the PPPoE process; or updating the forwarding table in a self-learning manner by listening to the data message of the session, and revoking the forwarding table through aging mechanism;
or, for the DHCP dynamic access mode, updating or revoking the forwarding table by listening to the DHCP process; or updating the forwarding table in a self-learning manner by listening to the data message of the session, and revoking the forwarding table through aging mechanism;
or, for the static IP access mode, updating the forwarding table in a self-learning manner by listening to the data message of the session, and revoking the forwarding table through aging mechanism; or updating or revoking the forwarding table by direct manual assignment.

FIG. 14 is a schematic structural diagram of an apparatus for establishing a forwarding table according to an embodiment of the present invention. As shown in FIG. 14, the apparatus includes an establishing unit.

The establishment unit is configured to: for a PPPoE dynamic access mode, dynamically establish the forwarding table by listening to PPPoE process or establish the forwarding table in a self-learning manner by listening to a data message of a session;
or, for DHCP dynamic access mode, establish the forwarding table by listening to DHCP process, or establish the forwarding table in a self-learning manner by listening to the data message of the session;
or, for static IP access mode, establish the forwarding table in a self-learning manner by listening to the data message of the session; or establish the forwarding table by direct manual assignment;
or, establish the forwarding table by interacting with BRAS/SR messages.

The forwarding table is used for a TOF to determine whether an upstream traffic message is local traffic.

The forwarding table includes IP information of a device directly connected to the TOF or directly connected to a layer-2 access device to which the TOF is connected or belongs.

The forwarding table also includes at least one of the following information corresponding to the IP information:
session type, PPPoE session ID, access port, layer-2 encapsulation information, session state, local traffic value, session time, BRAS/SR Media Access Control address (MAC);
The forwarding table is also used for the TOF to perform layer-3 forwarding for the upstream traffic message.

In some embodiments, the forwarding table includes a user forwarding table and a server forwarding table.

The user forwarding table includes user IP information, which is IP information of a user side equipment directly connected to a layer-2 access device to which the TOF is connected or belongs, and the user forwarding table also includes at least one of the following information corresponding to the user IP information:
session type, PPPoE session ID, access port, layer-2 encapsulation information, session state, local traffic value, session time, BRAS/SR MAC.

The server forwarding table includes server IP information, which is IP information of a server device directly connected to the TOF or directly connected to the layer-2 access device to which the TOF belongs, and the server forwarding table also includes at least one of the following information corresponding to the server IP information:
session type, PPPoE session ID, access port, layer-2 encapsulation information, session state, local traffic value, session time, BRAS/SR MAC.

The apparatus also includes an update or revocation unit.

The update or revocation unit is configured to: for the PPPoE dynamic access mode, dynamically update or revoke the forwarding table by listening to the PPPoE process; or update the forwarding table in a self-learning manner by listening to the data message of the session, and revoke the forwarding table through aging mechanism;
or, for the DHCP dynamic access mode, update or revoke the forwarding table by listening to the DHCP process; or update the forwarding table in a self-learning manner by listening to the data message of the session, and revoke the forwarding table through aging mechanism;
or, for the static IP access mode, update the forwarding table in a self-learning manner by listening to the data message of the session, and revoke the forwarding table through aging mechanism; or update or revoke the forwarding table by direct manual assignment.

Compared with related technologies, through the technical schemes of the embodiments of the present invention, local traffic offloading can be realized on a layer-2 access device.

It can be understood by those having ordinary skill in the art that all or some of the steps in the methods disclosed above, systems, and functional modules/units in the apparatus disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by several physical components. Some or all of the components may be implemented as software executed by a processor, such as a digital signal processor or a microprocessor, or as hardware, or as an integrated circuit, such as an application specific integrated circuit. Such software may be distributed on a computer-readable medium, which may include a computer storage medium (or non-transitory medium) and a communication medium (or transitory medium). As is well known to those having ordinary skill in the art, the term computer storage medium includes volatile and nonvolatile, removable and non-removable media implemented in any method or technology for storing information, such as computer-readable instructions, data structures, program modules or other data. The computer storage medium includes but is not limited to RAM, ROM, EEPROM, flash memory or other memory technologies, CD-ROM, digital versatile disk (DVD) or other optical disk storage, magnetic cartridge, magnetic tapes, magnetic disk storage or other magnetic storage devices, or any other media that can be used to store desired information and can be accessed by computers. Furthermore, As is well known to those having ordinary skill in the art that the communication medium generally includes computer-readable instructions, data structures, program modules or other data in modulated data signals such as carrier waves or other transmission mechanisms, and may include any information delivery medium.

## Claims

1. A traffic processing method, applied to a Traffic Offload Function, TOF, comprising:
determining (201) whether an upstream traffic message is local traffic; and
performing (202) layer-3 forwarding for the upstream traffic message according to a forwarding table stored locally in response to the upstream traffic message being local traffic;
**characterized in that** determining whether the upstream traffic message is local traffic comprises:
determining whether a destination IP of the upstream traffic message matches IP information in the forwarding table; wherein the IP information in the forwarding table is IP information of a device directly connected to the TOF or directly connected to a layer-2 access device to which the TOF is connected or belongs;
determining that the upstream traffic message is local traffic in response to a match between the destination IP of the upstream traffic message and the IP information in the forwarding table; and
determining that the upstream traffic message is not local traffic in response to no match between the destination IP of the upstream traffic message and the IP information in the forwarding table.

2. The method of claim 1, further comprising:
switching (403) the upstream traffic message to a Broadband Remote Access Server, BRAS, or a Service Router, SR, in response to the upstream traffic message being not local traffic.

3. The method of claim 1, wherein before determining whether the upstream traffic message is local traffic, the method further comprises:
establishing and saving the forwarding table; and
the forwarding table comprises the IP information and at least one of the following information corresponding to the IP information:
session type, Point-to-Point Protocol over Ethernet, PPPoE, session ID, access port, layer-2 encapsulation information, session state, local traffic value, session time, BRAS/SR Media Access Control, MAC address.

4. The method of claim 3, wherein:
the forwarding table comprises a user forwarding table and a server forwarding table;
the user forwarding table comprises user IP information, and the user IP information is IP information of a user side equipment directly connected to a layer-2 access device to which the TOF is connected or belongs; and the user forwarding table also comprises at least one of the following information corresponding to the user IP information:
session type, PPPoE session ID, access port, layer-2 encapsulation information, session state, local traffic value, session time, BRAS/SR MAC;
the server forwarding table comprises server IP information, and the server IP information is IP information of a server device directly connected to the TOF or directly connected to the layer-2 access device to which the TOF belongs; and the server forwarding table also comprises at least one of the following information corresponding to the server IP information:
session type, PPPoE session ID, access port, layer-2 encapsulation information, session state, local traffic value, session time, BRAS/SR MAC.

5. The method of claim 1, wherein:
the forwarding table comprises a user forwarding table and a server forwarding table; and
determining whether the destination IP of the upstream traffic message matches the IP information in the forwarding table comprises:
determining whether the destination IP of the upstream traffic message matches server IP information in the server forwarding table in response to the upstream traffic message being a traffic message sent by user side; and
determining whether the destination IP of the upstream traffic message matches user IP information in the user forwarding table in response to the upstream traffic message being a traffic message sent by server side.

6. The method of claim 3, wherein establishing the forwarding table comprises:
for PPPoE dynamic access mode, dynamically establishing the forwarding table by listening to PPPoE process, or establishing the forwarding table in a self-learning manner by listening to a data message of a session;
or, for Dynamic Host Configuration Protocol, DHCP, dynamic access mode, establishing the forwarding table by listening to DHCP process, or establishing the forwarding table in a self-learning manner by listening to the data message of the session;
or, for static IP access mode, establishing the forwarding table in a self-learning manner by listening to the data message of the session; or establishing the forwarding table by direct manual assignment;
or, establishing the forwarding table by interacting with BRAS/SR messages.

7. The method of claim 6, further comprising:
for the PPPoE dynamic access mode, dynamically updating or revoking the forwarding table by listening to the PPPoE process; or updating the forwarding table in a self-learning manner by listening to the data message of the session, and revoking the forwarding table through aging mechanism;
or, for the DHCP dynamic access mode, updating or revoking the forwarding table by listening to the DHCP process; or updating the forwarding table in a self-learning manner by listening to the data message of the session, and revoking the forwarding table through aging mechanism;
or, for the static IP access mode, updating the forwarding table in a self-learning manner by listening to the data message of the session, and revoking the forwarding table through aging mechanism; or updating or revoking the forwarding table by direct manual assignment;
or, updating or revoking the forwarding table by interacting with the BRAS/SR messages.

8. The method of claim 1, wherein performing layer-3 forwarding for the upstream traffic message according to the forwarding table stored locally comprises:
modifying a header of layer-2 encapsulation of the upstream traffic message according to the forwarding table stored locally, and sending the modified upstream traffic message, comprising:
modifying a source MAC address of the upstream traffic message to a MAC address of a BRAS/SR and a destination MAC address to a MAC address of a destination device corresponding to a destination IP of the upstream traffic message according to the MAC address of the BRAS/SR, a VLAN Tag and an access port corresponding to IP address information matched with the destination IP of the upstream traffic message in the forwarding table, and adding the VLAN tag; and
sending the modified upstream traffic message according to the access port.

9. The method of claim 8, wherein:
in response to the traffic message belonging to a PPPoE session, PPPoE session encapsulation is added to the header of the layer-2 encapsulation of the modified upstream traffic message, and then the modified upstream traffic message is sent according to the access port.

10. The method of claim 1, wherein:
the destination device corresponding to the destination IP of the upstream traffic message directly connected to the TOF is a mobile edge computing application server, MEC APP Server, or an Optical Line Terminal, OLT; and
the destination device directly connected to the layer-2 access device to which the TOF belongs is a MEC APP Server or a Home Gateway Unit, HGU.

11. A Traffic Offload Function, TOF, comprising: an IP forwarding module for upstream local traffic; wherein the IP forwarding module for upstream local traffic is configured to:
determine (201) whether an upstream traffic message is local traffic; and
perform (202) layer-3 forwarding for the upstream traffic message according to a forwarding table stored locally in response to the upstream traffic message being local traffic;
**characterized in that** the IP forwarding module for upstream local traffic is further configured to:
determine whether a destination IP of the upstream traffic message matches IP information in the forwarding table; wherein the IP information in the forwarding table is IP information of a device directly connected to the TOF or directly connected to a layer-2 access device to which the TOF is connected or belongs;
determine that the upstream traffic message is local traffic in response to a match between the destination IP of the upstream traffic message and the IP information in the forwarding table; and
determine that the upstream traffic message is not local traffic in response to no match between the destination IP of the upstream traffic message and the IP information in the forwarding table.

12. A layer-2 access device comprising the TOF of claim 11.

13. The layer-2 access device of claim 12, wherein the layer-2 access device further comprises a switch board;
the switch board is configured to receive the upstream traffic message and match a destination MAC of the upstream traffic message with the corresponding BRAS/SR MAC;
send the upstream traffic message to the TOF in response to a match between the destination MAC of the upstream traffic message and the corresponding BRAS/SR MAC; and
switch the upstream traffic message to the BRAS or the SR in response to no match between the destination MAC of the upstream traffic message and the corresponding BRAS/SR MAC.

14. A storage medium storing a computer program which, when executed by a processor, causes the processor to perform the method of any of claims 1 to 10.

## Patentansprüche

1. Verfahren zur Verkehrsverarbeitung, das auf eine Traffic-Offload-Function, TOF, angewendet wird, umfassend:
Bestimmen (201), ob es sich bei einer Upstream-Verkehrsnachricht um lokalen Verkehr handelt; und
Durchführen (202) einer Schicht-3-Weiterleitung für die Upstream-Verkehrsnachricht gemäß einer lokal gespeicherten Weiterleitungstabelle als Reaktion darauf, dass es sich bei der Upstream-Verkehrsnachricht um lokalen Verkehr handelt;
**dadurch gekennzeichnet, dass** das Bestimmen, ob es sich bei der Upstream-Verkehrsnachricht um lokalen Verkehr handelt, Folgendes umfasst:
Bestimmen, ob eine Ziel-IP der Upstream-Verkehrsnachricht mit IP-Informationen in der Weiterleitungstabelle übereinstimmt; wobei die IP-Informationen in der Weiterleitungstabelle IP-Informationen einer Einrichtung sind, die direkt mit der TOF verbunden ist oder direkt mit einer Schicht-2-Zugriffseinrichtung verbunden ist, mit der die TOF verbunden ist oder zu der sie gehört;
Bestimmen, dass es sich bei der Upstream-Verkehrsnachricht um lokalen Verkehr handelt, als Reaktion auf eine Übereinstimmung zwischen der Ziel-IP der Upstream-Verkehrsnachricht und den IP-Informationen in der Weiterleitungstabelle; und
Bestimmen, dass es sich bei der Upstream-Verkehrsnachricht nicht um lokalen Verkehr handelt, als Reaktion auf keine Übereinstimmung zwischen der Ziel-IP der Upstream-Verkehrsnachricht und den IP-Informationen in der Weiterleitungstabelle.

2. Verfahren nach Anspruch 1, ferner umfassend:
Umschalten (403) der Upstream-Verkehrsnachricht auf einen Broadband-Remote-Access-Server, BRAS, oder einen Service-Router, SR, als Reaktion darauf, dass es sich bei der Upstream-Verkehrsnachricht nicht um lokalen Verkehr handelt.

3. Verfahren nach Anspruch 1, wobei das Verfahren vor dem Bestimmen, ob es sich bei der Upstream-Verkehrsnachricht um lokalen Verkehr handelt, ferner Folgendes umfasst:
Einrichten und Speichern der Weiterleitungstabelle; und
die Weiterleitungstabelle die IP-Informationen und mindestens eine der folgenden Informationen, die den IP-Informationen entsprechen, umfasst:
Sitzungstyp, Point-to-Point-Protocol-over-Ethernet-Sitzungs-ID, PPPoE-Sitzungs-ID, Zugriffsport, Schicht-2-Verkapselungsinformationen, Sitzungsstatus, lokaler Verkehrswert, Sitzungszeit, BRAS/SR-Media-Access-Control-Adresse, BRAS/SR-MAC-Adresse.

4. Verfahren nach Anspruch 3, wobei:
die Weiterleitungstabelle eine Benutzer-Weiterleitungstabelle und eine Server-Weiterleitungstabelle umfasst;
die Benutzer-Weiterleitungstabelle Benutzer-IP-Informationen umfasst, und die Benutzer-IP-Informationen IP-Informationen einer benutzerseitigen Ausrüstung sind, die direkt mit einer Schicht-2-Zugangseinrichtung verbunden ist, mit der die TOF verbunden ist oder zu der sie gehört; und die Benutzer-Weiterleitungstabelle ferner mindestens eine der folgenden Informationen, die den Benutzer-IP-Informationen entsprechen, umfasst:
Sitzungstyp, PPPoE-Sitzungs-ID, Zugriffsport, Schicht-2-Verkapselungsinformationen, Sitzungsstatus, lokaler Verkehrswert, Sitzungszeit, BRAS/SR-MAC;
die Server-Weiterleitungstabelle Server-IP-Informationen umfasst, und die Server-IP-Informationen IP-Informationen einer Servereinrichtung sind, die direkt mit der TOF verbunden ist oder direkt mit der Schicht-2-Zugriffseinrichtung verbunden ist, zu der die TOF gehört; und die Server-Weiterleitungstabelle ferner mindestens eine der folgenden Informationen, die den Server-IP-Informationen entsprechen, umfasst:
Sitzungstyp, PPPoE-Sitzungs-ID, Zugriffsport, Schicht-2-Verkapselungsinformationen, Sitzungsstatus, lokaler Verkehrswert, Sitzungszeit, BRAS/SR-MAC.

5. Verfahren nach Anspruch 1, wobei:
die Weiterleitungstabelle eine Benutzer-Weiterleitungstabelle und eine Server-Weiterleitungstabelle umfasst; und
das Bestimmen, ob die Ziel-IP der Upstream-Verkehrsnachricht mit den IP-Informationen in der Weiterleitungstabelle übereinstimmt, Folgendes umfasst:
Bestimmen, ob die Ziel-IP der Upstream-Verkehrsnachricht mit den Server-IP-Informationen in der Server-Weiterleitungstabelle übereinstimmt, als Reaktion darauf, dass es sich bei der Upstream-Verkehrsnachricht um eine benutzerseitig gesendete Verkehrsnachricht handelt; und
Bestimmen, ob die Ziel-IP der Upstream-Verkehrsnachricht mit den Benutzer-IP-Informationen in der Benutzer-Weiterleitungstabelle übereinstimmt, als Reaktion darauf, dass es sich bei der Upstream-Verkehrsnachricht um eine serverseitig gesendete Verkehrsnachricht handelt.

6. Verfahren nach Anspruch 3, wobei das Einrichten der Weiterleitungstabelle Folgendes umfasst:
für den dynamischen PPPoE-Zugriffsmodus, dynamisches Einrichten der Weiterleitungstabelle durch Abhören des PPPoE-Prozesses oder selbstlernendes Einrichten der Weiterleitungstabelle durch Abhören einer Datennachricht einer Sitzung;
oder, für den dynamischen Zugriffsmodus des Dynamic-Host-Configuration-Protocol, DHCP, Einrichten der Weiterleitungstabelle durch Abhören des DHCP-Prozesses oder selbstlernendes Einrichten der Weiterleitungstabelle durch Abhören der Datennachricht der Sitzung;
oder, für den statischen IP-Zugriffsmodus, selbstlernendes Einrichten der Weiterleitungstabelle durch Abhören der Datennachricht der Sitzung; oder Einrichten der Weiterleitungstabelle durch direkte manuelle Zuweisung;
oder Einrichten der Weiterleitungstabelle durch Interagieren mit BRAS/SR-Nachrichten.

7. Verfahren nach Anspruch 6, ferner umfassend:
für den dynamischen PPPoE-Zugriffsmodus, dynamisches Aktualisieren oder Widerrufen der Weiterleitungstabelle durch Abhören des PPPoE-Prozesses; oder selbstlernendes Aktualisieren der Weiterleitungstabelle durch Abhören der Datennachricht der Sitzung und Widerrufen der Weiterleitungstabelle durch einen Alterungsmechanismus;
oder, für den dynamischen DHCP-Zugriffsmodus, Aktualisieren oder Widerrufen der Weiterleitungstabelle durch Abhören des DHCP-Prozesses; oder selbstlernendes Aktualisieren der Weiterleitungstabelle durch Abhören der Datennachricht der Sitzung und Widerrufen der Weiterleitungstabelle durch einen Alterungsmechanismus;
oder, für den statischen IP-Zugriffsmodus, selbstlernendes Aktualisieren der Weiterleitungstabelle durch Abhören der Datennachricht der Sitzung und Widerrufen der Weiterleitungstabelle durch einen Alterungsmechanismus; oder Aktualisieren oder Widerrufen der Weiterleitungstabelle durch direkte manuelle Zuweisung;
oder Aktualisieren oder Widerrufen der Weiterleitungstabelle durch Interagieren mit den BRAS/SR-Nachrichten.

8. Verfahren nach Anspruch 1, wobei das Durchführen der Schicht-3-Weiterleitung für die Upstream-Verkehrsnachricht gemäß der lokal gespeicherten Weiterleitungstabelle Folgendes umfasst:
Modifizieren eines Headers der Schicht-2-Verkapselung der Upstream-Verkehrsnachricht gemäß der lokal gespeicherten Weiterleitungstabelle und Senden der modifizierten Upstream-Verkehrsnachricht, was Folgendes umfasst:
Modifizieren einer Quell-MAC-Adresse der Upstream-Verkehrsnachricht in eine MAC-Adresse eines BRAS/SR und einer Ziel-MAC-Adresse in eine MAC-Adresse einer Zieleinrichtung entsprechend einer Ziel-IP der Upstream-Verkehrsnachricht gemäß der MAC-Adresse des BRAS/SR, einem VLAN-Tag und einem Zugriffsport, die IP-Adressinformationen entsprechen, die mit der Ziel-IP der Upstream-Verkehrsnachricht in der Weiterleitungstabelle übereinstimmen, und Hinzufügen des VLAN-Tags; und
Senden der modifizierten Upstream-Verkehrsnachricht gemäß dem Zugriffsport.

9. Verfahren nach Anspruch 8, wobei:
als Reaktion darauf, dass die Verkehrsnachricht zu einer PPPoE-Sitzung gehört, dem Header der Schicht-2-Verkapselung der modifizierten Upstream-Verkehrsnachricht eine PPPoE-Sitzungsverkapselung hinzugefügt wird, und dann die modifizierte Upstream-Verkehrsnachricht gemäß dem Zugriffsport gesendet wird.

10. Verfahren nach Anspruch 1, wobei:
die Zieleinrichtung, die der Ziel-IP der Upstream-Verkehrsnachricht entspricht, die direkt mit der TOF verbunden ist, ein Mobile-Edge-Computing-Application-Server, MEC-APP-Server, oder ein Optical-Line-Terminal, OLT, ist; und
die Zieleinrichtung, die direkt mit der Schicht-2-Zugriffseinrichtung verbunden ist, zu der die TOF gehört, ein MEC-APP-Server oder eine Home-Gateway-Unit, HGU, ist.

11. Traffic-Offload-Function, TOF, umfassend: ein IP-Weiterleitungsmodul für lokalen Upstream-Verkehr; wobei das IP-Weiterleitungsmodul für lokalen Upstream-Verkehr zu Folgendem konfiguriert ist:
Bestimmen (201), ob es sich bei einer Upstream-Verkehrsnachricht um lokalen Verkehr handelt; und
Durchführen (202) einer Schicht-3-Weiterleitung für die Upstream-Verkehrsnachricht gemäß einer lokal gespeicherten Weiterleitungstabelle als Reaktion darauf, dass es sich bei der Upstream-Verkehrsnachricht um lokalen Verkehr handelt;
**dadurch gekennzeichnet, dass** das IP-Weiterleitungsmodul für lokalen Upstream-Verkehr ferner zu Folgendem konfiguriert ist:
Bestimmen, ob eine Ziel-IP der Upstream-Verkehrsnachricht mit IP-Informationen in der Weiterleitungstabelle übereinstimmt; wobei die IP-Informationen in der Weiterleitungstabelle IP-Informationen einer Einrichtung sind, die direkt mit der TOF verbunden ist oder direkt mit einer Schicht-2-Zugriffseinrichtung verbunden ist, mit der die TOF verbunden ist oder zu der sie gehört;
Bestimmen, dass es sich bei der Upstream-Verkehrsnachricht um lokalen Verkehr handelt, als Reaktion auf eine Übereinstimmung zwischen der Ziel-IP der Upstream-Verkehrsnachricht und den IP-Informationen in der Weiterleitungstabelle; und
Bestimmen, dass es sich bei der Upstream-Verkehrsnachricht nicht um lokalen Verkehr handelt, als Reaktion auf keine Übereinstimmung zwischen der Ziel-IP der Upstream-Verkehrsnachricht und den IP-Informationen in der Weiterleitungstabelle.

12. Schicht-2-Zugriffseinrichtung, die TOF nach Anspruch 11 umfassend.

13. Schicht-2-Zugriffseinrichtung nach Anspruch 12, wobei die Schicht-2-Zugriffseinrichtung ferner eine Schalttafel umfasst;
die Schalttafel dazu konfiguriert ist, die Upstream-Verkehrsnachricht zu empfangen und eine Ziel-MAC der Upstream-Verkehrsnachricht mit der entsprechenden BRAS/SR-MAC abzugleichen;
Senden der Upstream-Verkehrsnachricht an die TOF als Reaktion auf eine Übereinstimmung zwischen der Ziel-MAC der Upstream-Verkehrsnachricht und der entsprechenden BRAS/SR-MAC; und
Umschalten der Upstream-Verkehrsnachricht auf den BRAS oder den SR als Reaktion auf keine Übereinstimmung zwischen der Ziel-MAC der Upstream-Verkehrsnachricht und der entsprechenden BRAS/SR-MAC.

14. Speichermedium, ein Computerprogramm speichernd, das, wenn es durch einen Prozessor ausgeführt wird, bewirkt, dass der Prozessor das Verfahren nach einem der Ansprüche 1 bis 10 durchführt.

## Revendications

1. Procédé de traitement de trafic, appliqué à une fonction de déchargement de trafic, TOF, comprenant :
la détermination (201) si un message de trafic montant est un trafic local ; et
l'exécution (202) d'un transfert de couche 3 pour le message de trafic montant selon une table de transfert stockée localement en réponse au fait que le message de trafic montant soit un trafic local ;
**caractérisé en ce que** la détermination si le message de trafic montant est un trafic local comprend :
la détermination si une IP de destination du message de trafic montant correspond aux informations IP dans la table de transfert ; dans lequel les informations IP dans la table de transfert sont les informations IP d'un dispositif directement connecté au TOF ou directement connecté à un dispositif d'accès de couche 2 auquel le TOF est connecté ou appartient ;
la détermination que le message de trafic montant est un trafic local en réponse à une correspondance entre l'adresse IP de destination du message de trafic montant et les informations IP dans la table de transfert ; et
la détermination que le message de trafic montant n'est pas un trafic local en réponse à la non-correspondance entre l'IP de destination du message de trafic montant et les informations IP dans la table de transfert.

2. Procédé selon la revendication 1, comprenant en outre :
la commutation (403) du message de trafic montant vers un serveur d'accès à distance à large bande, BRAS, ou un routeur de service, SR, en réponse au fait que le message de trafic montant ne soit pas un trafic local.

3. Procédé selon la revendication 1, dans lequel avant de déterminer si le message de trafic montant est un trafic local, le procédé comprend en outre :
l'établissement et la sauvegarde de la table de transfert ; et
la table de transfert comprend les informations IP et au moins une des informations suivantes correspondant aux informations IP :
type de session, protocole point à point sur Ethernet, PPPoE, ID de session, port d'accès, informations d'encapsulation de couche 2, état de session, valeur du trafic local, durée de session, contrôle d'accès au support BRAS/SR, adresse MAC.

4. Procédé selon la revendication 3, dans lequel :
la table de transfert comprend une table de transfert d'utilisateur et une table de transfert de serveur ;
la table de transfert d'utilisateur comprend des informations IP d'utilisateur, et les informations IP d'utilisateur sont des informations IP d'un équipement côté utilisateur directement connecté à un dispositif d'accès de couche 2 auquel le TOF est connecté ou appartient ; et la table de transfert d'utilisateur comprend également au moins l'une des informations suivantes correspondant aux informations IP d'utilisateur :
type de session, ID de session PPPoE, port d'accès, informations d'encapsulation de couche 2, état de session, valeur du trafic local, durée de session, MAC BRAS/SR ;
la table de transfert de serveur comprend des informations IP de serveur, et les informations IP de serveur sont des informations IP d'un dispositif serveur directement connecté au TOF ou directement connecté au dispositif d'accès de couche 2 auquel appartient le TOF ; et la table de transfert de serveur comprend également au moins l'une des informations suivantes correspondant aux informations IP de serveur :
type de session, ID de session PPPoE, port d'accès, informations d'encapsulation de couche 2, état de session, valeur du trafic local, durée de session, MAC BRAS/SR.

5. Procédé selon la revendication 1, dans lequel :
la table de transfert comprend une table de transfert d'utilisateur et une table de transfert de serveur ; et
la détermination si l'IP de destination du message de trafic montant correspond aux informations IP dans la table de transfert comprend :
la détermination si l'IP de destination du message de trafic montant correspond aux informations IP de serveur dans la table de transfert de serveur en réponse au fait que le message de trafic montant soit un message de trafic envoyé par le côté utilisateur ; et
la détermination si l'IP de destination du message de trafic montant correspond aux informations IP d'utilisateur dans la table de transfert d'utilisateur en réponse au fait que le message de trafic montant soit un message de trafic envoyé par le côté serveur.

6. Procédé selon la revendication 3, dans lequel l'établissement de la table de transfert comprend :
pour le mode d'accès dynamique PPPoE, l'établissement dynamique de la table de transfert en écoutant le processus PPPoE, ou l'établissement de la table de transfert de manière auto-apprenante en écoutant un message de données d'une session ;
ou, pour le mode d'accès dynamique en protocole de configuration dynamique de l'hôte, DHCP, l'établissement de la table de transfert en écoutant le processus DHCP, ou l'établissement de la table de transfert de manière auto-apprenante en écoutant le message de données de la session ;
ou, pour le mode d'accès IP statique, l'établissement de la table de transfert de manière auto-apprenante en écoutant le message de données de la session ; ou l'établissement de la table de transfert par affectation manuelle directe ;
ou, l'établissement de la table de transfert en interagissant avec les messages BRAS/SR.

7. Procédé selon la revendication 6, comprenant en outre :
pour le mode d'accès dynamique PPPoE, la mise à jour ou la révocation dynamique de la table de transfert en écoutant le processus PPPoE ; ou la mise à jour de la table de transfert de manière auto-apprenante en écoutant le message de données de la session, et la révocation de la table de transfert via un mécanisme de vieillissement ;
ou, pour le mode d'accès dynamique DHCP, la mise à jour ou la révocation de la table de transfert en écoutant le processus DHCP ; ou la mise à jour la table de transfert de manière auto-apprenante en écoutant le message de données de la session, et la révocation de la table de transfert via un mécanisme de vieillissement ;
ou, pour le mode d'accès IP statique, la mise à jour de la table de transfert de manière auto-apprenante en écoutant le message de données de la session, et la révocation de la table de transfert via un mécanisme de vieillissement ; ou la mise à jour ou la révocation de la table de transfert par affectation manuelle directe ;
ou, la mise à jour ou la révocation de la table de transfert en interagissant avec les messages BRAS/SR.

8. Procédé selon la revendication 1, dans lequel l'exécution d'un transfert de couche 3 pour le message de trafic montant selon la table de transfert stockée localement comprend :
la modification d'un en-tête d'encapsulation de couche 2 du message de trafic montant selon la table de transfert stockée localement, et l'envoi du message de trafic montant modifié, comprenant :
la modification d'une adresse MAC source du message de trafic montant en une adresse MAC d'un BRAS/SR et une adresse MAC de destination en une adresse MAC d'un dispositif de destination correspondant à une IP de destination du message de trafic montant en fonction de l'adresse MAC du BRAS/SR, d'une balise VLAN et d'un port d'accès correspondant aux informations d'adresse IP mises à correspondance avec l'IP de destination du message de trafic montant dans la table de transfert, et l'ajout de la balise VLAN ; et
l'envoi du message de trafic montant modifié en fonction du port d'accès.

9. Procédé selon la revendication 8, dans lequel :
en réponse au fait que le message de trafic appartienne à une session PPPoE, l'encapsulation de session PPPoE est ajoutée à l'en-tête de l'encapsulation de couche 2 du message de trafic montant modifié, puis le message de trafic montant modifié est envoyé en fonction du port d'accès.

10. Procédé selon la revendication 1, dans lequel :
le dispositif de destination correspondant à l'IP de destination du message de trafic montant directement connecté au TOF est un serveur d'applications informatiques mobiles, serveur MEC APP, ou un terminal de ligne optique, OLT ; et
le dispositif de destination directement connecté au dispositif d'accès de couche 2 auquel appartient le TOF est un serveur MEC APP ou une unité de passerelle domestique, HGU.

11. Fonction de déchargement de trafic, TOF, comprenant : un module de transfert IP pour le trafic local montant ; dans laquelle le module de transfert IP pour le trafic local en amont est configuré pour :
déterminer (201) si un message de trafic montant est un trafic local ; et
effectuer (202) un transfert de couche 3 pour le message de trafic montant selon une table de transfert stockée localement en réponse au fait que le message de trafic montant soit un trafic local ;
**caractérisé en ce que** le module de transfert IP pour le trafic local montant est en outre configuré pour :
déterminer si une IP de destination du message de trafic montant correspond aux informations IP dans la table de transfert ; dans lequel les informations IP dans la table de transfert sont des informations IP d'un dispositif directement connecté au TOF ou directement connecté à un dispositif d'accès de couche 2 auquel le TOF est connecté ou appartient ;
déterminer que le message de trafic montant est un trafic local en réponse à une correspondance entre l'IP de destination du message de trafic montant et les informations IP dans la table de transfert ; et
déterminer que le message de trafic montant n'est pas un trafic local en réponse à la non-correspondance entre l'IP de destination du message de trafic montant et les informations IP dans la table de transfert.

12. Dispositif d'accès de couche 2 comprenant le TOF selon la revendication 11.

13. Dispositif d'accès de couche 2 selon la revendication 12, dans lequel le dispositif d'accès de couche 2 comprend en outre une carte de commutation ;
la carte de commutation est configuré pour recevoir le message de trafic montant et faire correspondre une MAC de destination du message de trafic montant à la MAC BRAS/SR correspondante ;
envoyer le message de trafic montant au TOF en réponse à une correspondance entre la MAC de destination du message de trafic montant et la MAC BRAS/SR correspondante ; et
basculer le message de trafic montant vers le BRAS ou le SR en réponse à la non-correspondance entre la MAC de destination du message de trafic montant et la MAC BRAS/SR correspondante.

14. Programme informatique stockant un programme informatique qui, lorsqu'il est exécuté par un processeur, amène le processeur à réaliser le procédé selon l'une quelconque des revendications 1 à 10.
